# EUROPÄISCHE PATENTSCHRIFT

(11) **EP 3 448 700 B1**
(45) Veröffentlichungstag und Bekanntmachung des Hinweises auf die Patenterteilung: **07.10.2020**
(21) Anmeldenummer: 17705311.3
(22) Anmeldetag: 14.02.2017
(51) Int. Cl.: B60H 1/00, B60H 1/34, B60K 37/06, F24F 13/14

(54) **LÜFTUNGSEINRICHTUNG FÜR EIN KRAFTFAHRZEUG UND ZUGEHÖRIGES KRAFTFAHRZEUG**
VENTILATION DEVICE FOR A MOTOR VEHICLE AND ASSOCIATED MOTOR VEHICLE
DISPOSITIF D'AÉRATION POUR UN VÉHICULE ET VÉHICULE COMPRENANT UN TEL DISPOSITIF

(30) Priorität: 25.04.2016 DE 102016004992
(43) Veröffentlichungstag der Anmeldung: 06.03.2019
(73) Patentinhaber: Audi AG, 85045 Ingolstadt (DE)
(72) Erfinder: WUNDERLICH, Matthias, 85053 Ingolstadt (DE)
(86) Internationale Anmeldenummer: PCT/EP2017/000206
(87) Internationale Veröffentlichungsnummer: WO 2017/186321

(56) Entgegenhaltungen:
- WO-A1-2014/196754
- DE-A1-102013 008 066
- DE-A1-102014 221 133
- DE-A1-102015 004 062
- DE-U1-202015 106 878

## Beschreibung

Die Erfindung betrifft eine Lüftungseinrichtung für ein Kraftfahrzeug mit einem ersten Lüftungskanal zum Führen eines ersten Luftstroms über eine erste Lüftungseinrichtungsöffnung in einen Kraftfahrzeuginnenraum, einem zweiten Lüftungskanal zum Führen eines zweiten Luftstroms über eine zweite Lüftungseinrichtungsöffnung in den Kraftfahrzeuginnenraum, und einer ersten und einer zweiten Schließvorrichtung, deren jeweiliger Öffnungsgrad durch eine Bedieneinrichtung zwischen einer Offen- und einer Schließstellung verstellbar ist, wobei die erste Schließvorrichtung in der Schließstellung den ersten Lüftungskanal und die zweite Schließvorrichtung in der Schließstellung den zweiten Lüftungskanal verschließt, wobei die Bedieneinrichtung wenigstens zwei Bedienfreiheitsgrade aufweist, wobei mittels des ersten Bedienfreiheitsgrades auswählbar ist, welche der Schließvorrichtungen zur nachfolgenden Einstellung des Öffnungsgrades durch den zweiten Bedienfreiheitsgrad ausgewählt ist oder sind, und mittels des zweiten Bedienfreiheitsgrades der Öffnungsgrad oder die Öffnungsgrade der ausgewählten Schließvorrichtung einstellbar ist oder sind. Daneben betrifft die Erfindung ein Kraftfahrzeug.

Lüftungseinrichtungen dienen dazu, wenigstens einen Luftstrom in den Innenraum eines Kraftfahrzeugs zu leiten, um eine gezielte Belüftung respektive Klimatisierung des Kraftfahrzeuginnenraums zu ermöglichen. Üblicherweise werden in dem Kraftfahrzeug mehrere Belüftungseinrichtungen an unterschiedlichen Stellen angeordnet, um den Luftstrom möglichst gleichmäßig in dem Innenraum des Kraftfahrzeugs verteilen zu können.

Typischerweise werden Lüftungseinrichtungen im Armaturenbrett, in der Mittelkonsole, in der Nähe der Seitenscheiben und/oder im Fußraum des Kraftfahrzeuginnenraums angeordnet. Im Allgemeinen steuern die Lüftungseinrichtungen sowohl den Volumenstrom als auch die Richtung eines Luftstroms. Üblicherweise umfasst eine Lüftungseinrichtung eine Bedieneinrichtung, wie beispielsweise ein Bedienrad oder einen Bedienhebel, um es einem Benutzer zu ermöglichen, eine gewünschte Luftmenge oder eine Richtung eines Luftstroms einzustellen. Beispielsweise kann der Luftstrom vom Benutzer in eine bestimmte Richtung verstellt, gedrosselt oder durch vollständiges Verschließen der an der Lüftungseinrichtung angeordneten Schließvorrichtung komplett gestoppt werden. Herkömmliche Lüftungseinrichtungen für Belüftungsvorrichtungen, die in Kraftfahrzeugen eingesetzt werden, weisen zumeist mehrere Bedieneinrichtungen auf, um unterschiedliche Einstellfunktionen der Lüftungseinrichtung zu ermöglichen. Bei zunehmendem Funktionsumfang derartiger Lüftungseinrichtungen ist daher eine Vereinfachung der Bedienung vorteilhaft.

DE 43 27 266 C1 offenbart eine Seitendüse zur Innenraumbelüftung eines Fahrzeugs, die zwei in eine gemeinsame Düseneintrittsöffnung mündende Düsenteile beinhaltet, umfassend eine dem ersten Düsenteil zugeordnete, luftmengenregulierende erste Klappe und eine dem zweiten Düsenteil zugeordnete, luftmengenregulierende zweite Klappe. Ferner sind fernbedienbare Mittel, mit denen die zweite Klappe in ihre Offenstellung bewegbar ist, und eine handbedienbare Einstelleinrichtung, mit der die erste Klappe verstellbar ist, vorgesehen.

DE 10 2011 114 766 A1 offenbart ein Lüftungs- und Heizungsmodul für Kraftfahrzeuge mit wenigstens einem Lüftungskanal, wobei der Lüftungskanal in einem Luftausströmer im Innenraum des Kraftfahrzeugs endet und wobei wenigstens eine Luftklappe zur Veränderung des Durchtrittquerschnittes des Lüftungskanals vorgesehen ist. Zur Verstellung der Luftklappe steht ein Bedienrad mit der Luftklappe in Wirkverbindung.

Aus der Druckschrift DE 10 2013 008 066 A1 ist eine Belüftungseinrichtung eines Fahrzeugs bekannt. Eine Sensorvorrichtung ist dazu eingerichtet, die Präsenz eines Objekts in einem vorbestimmten Bereich im Fahrzeuginnenraum zu erfassen und auf Basis der Position des Objekts eine Verstelleinrichtung zur Konfiguration des Luftstroms anzusteuern. Bei dem erfassten Objekt kann es sich insbesondere um eine Hand handeln.

Eine Bedieneinrichtung für ein Kraftfahrzeug, durch die in einer ersten Drehposition durch eine Lageveränderung eine erste Bedienfunktion bedienbar ist und durch die in einer zweiten Drehposition durch eine Lageveränderung wenigstens eine weitere Funktion der Bedieneinrichtung bedienbar ist, ist aus der Druckschrift DE 10 2014 221 133 A1 bekannt. Beispielsweise kann die erste Drehposition zur Einstellung einer Temperatur und die zweite Drehposition zur Einstellung einer Gebläsedrehzahl nutzbar sein.

Die Aufgabe der Erfindung besteht darin, eine Lüftungseinrichtung mit einem verbesserten Bedienkonzept anzugeben.

Zur Lösung dieser Aufgabe ist bei einer Lüftungseinrichtung der eingangs genannten Art erfindungsgemäß vorgesehen, dass der erste Bedienfreiheitsgrad einer linearen Bewegung oder einer Rotation der Bedieneinrichtung oder einer Komponente der Bedieneinrichtung in eine erste Bedienrichtung und der zweite Bedienfreiheitsgrad einer linearen Bewegung oder einer Rotation der Bedieneinrichtung oder der Komponente in eine gewinkelt zu der ersten Bedienrichtung stehende zweite Bedienrichtung entsprechen.
Die Bedieneinrichtung, welche an der Lüftungseinrichtung angeordnet sein kann, kann so verstellt werden, dass wahlweise der Öffnungsgrad der ersten Schließvorrichtung und/oder der zweiten Schließvorrichtung durch diese eine Bedieneinrichtung steuerbar sind. Die benötigte Anzahl unterschiedlicher Bedieneinrichtungen kann erfindungsgemäß reduziert werden, wodurch sich die Herstellungskosten der Lüftungseinrichtung reduzieren. Zudem kann dadurch, dass die Bedieneinrichtung sowohl für die Verstellung der ersten als auch der zweiten Schließvorrichtung ausgebildet ist, ein für einen Benutzer intuitives Bedienkonzept für die Lüftungseinrichtung realisiert werden.

Beispielsweise kann eine Bewegung der Bedieneinrichtung nach links oder rechts zur Auswahl der ersten oder der zweiten Schließvorrichtung dienen, während eine Bewegung der Bedieneinrichtung nach oben oder unten den

Öffnungsgrad wenigstens einer Ausgewählten der Schließvorrichtungen steuern kann. Somit lassen sich die erste und die zweite Schließvorrichtung selektiv auswählen und ihr jeweiliger Öffnungsgrad einstellen, wobei es möglich ist, dass durch die Bedieneinrichtung auch mehrere respektive alle Schließvorrichtungen und/oder keine der Schließvorrichtungen zur Verstellung des Öffnungsgrades ausgewählt werden können.

Die Bedieneinrichtung kann an der Lüftungseinrichtung zwischen der ersten und der zweiten Lüftungseinrichtungsöffnung angeordnet sein. Bei einer Bewegung der Bedieneinrichtung gemäß dem ersten Bedienfreiheitsgrad kann sich ihr Abstand zu einer der Lüftungseinrichtungsöffnungen verkleinern und ihr Abstand zu der anderen Lüftungseinrichtungsöffnung gleichzeitig vergrößern. Hierbei kann ein besonders intuitives Bedienkonzept realisiert werden, wenn jene Schließvorrichtung ausgewählt wird, die der Lüftungseinrichtungsöffnung zugeordnet ist, in deren Richtung die Bedieneinrichtung bewegt wird.

Die Bedieneinrichtung kann in einer von mehreren Verstellpositionen verrasten, wenn sie von einem Benutzer entsprechend des ersten Bedienfreiheitsgrades betätigt wird. Andererseits ist es allerdings auch möglich, dass die Bedieneinrichtung entgegen einer Rückstellkraft betätigbar ist und dementsprechend unmittelbar nach der Betätigung durch einen Benutzer in ihre Ausgangsposition zurückverstellt wird. Die durch die Betätigung erfolgte Auswahl der zu verstellenden Schließvorrichtung kann in einer Steuereinrichtung gespeichert werden oder es kann durch die Betätigung eine mechanische Konfiguration der Lüftungseinrichtung verändert werden, um den zweiten Bedienfreiheitsgrad der Bedieneinrichtung mit der ersten und/oder der zweiten Schließvorrichtung zu koppeln bzw. von dieser zu entkoppeln.

Die Lüftungseinrichtung kann eine Beleuchtungseinrichtung und ein die Beleuchtungseinrichtung steuerndes Steuergerät aufweisen, wobei das Steuergerät eingerichtet ist, die Beleuchtungseinrichtung in Abhängigkeit der ausgewählten Schließvorrichtung zur Gabe eines optischen Signals anzusteuern. Anhand des ausgegebenen optischen Signals kann für einen Benutzer erkennbar sein, welche der Schließvorrichtungen ausgewählt ist bzw. sind. Die optischen Signale können sich hinsichtlich ihrer Helligkeit und/oder ihrer Farbe unterscheiden, wobei die Beleuchtungseinrichtung auch mehrere Leuchtmittel aufweisen kann, die durch eine entsprechende Anordnung an der Lüftungseinrichtung eine Zuordnung des jeweiligen Leuchtmittels zu einer Schließvorrichtung erkennen lassen. Eine bevorzugte Variante der Erfindung kann vorsehen, dass ein einer Schließvorrichtung zugeordnetes Leuchtmittel sichtbares Licht ausgibt, wenn die dem Leuchtmittel zugeordnete Schließvorrichtung durch die Bedieneinrichtung ausgewählt ist, und kein Licht ausgibt, wenn die zugeordnete Schließvorrichtung nicht ausgewählt ist.

Eine Variante der Erfindung kann vorsehen, dass die Lüftungseinrichtung eine Kopplungseinrichtung aufweist, die das Bedienelement mit der ausgewählten Schließvorrichtung oder den ausgewählten Schließvorrichtungen mechanisch bewegungskoppelt. Da im Rahmen der Erfindung eine selektive Auswahl einer oder mehrerer Schließvorrichtungen vorgesehen ist, kann die Kopplungseinrichtung eine mechanische Verbindung zu keiner, einer oder zu mehreren Schließvorrichtungen herstellen. Die mechanische Kopplung kann beispielsweise über eine Bedienhandlung am ersten Bedienfreiheitsgrad einer Welle erfolgen, deren Lage durch eine Bedienhandlung am ersten Bedienfreiheitsgrad zwischen zwei Positionen verstellbar ist, in denen sie mit jeweils einer der Schließvorrichtungen mittels der Kopplungseinrichtung gekoppelt ist. Die Kopplungseinrichtung kann dazu eingerichtet sein, einzelne Schließvorrichtungen zu koppeln oder zu entkoppeln. Eine Betätigung der Bedieneinrichtung gemäß des zweiten Bedienfreiheitsgrades, beispielsweise eine Drehbewegung, kann über die mechanische Welle an die Kopplungseinrichtung übertragen und an die ausgewählte Verstelleinrichtung gegeben werden, um deren Öffnungsgrad zu verstellen.

Erfindungsgemäß kann die Lüftungseinrichtung eine Verstelleinrichtung, die zur separaten Verstellung des Öffnungsgrades der ersten und der zweiten Schließvorrichtung in Abhängigkeit eines Steuersignals eingerichtet ist, und eine Steuereinrichtung, die zur Bereitstellung des Steuersignals in Abhängigkeit von einer über wenigstens einen Sensor der Bedieneinrichtung erfassten Bedieneingabe eingerichtet ist, umfassen. Es ist möglich, dass die vom Sensor erfasste Bedieneingabe per drahtloser Funkübertragung an die Steuereinrichtung übertragbar ist. Die Verstelleinrichtung kann mehrere Aktoren aufweisen, die dazu eingerichtet sind, in Abhängigkeit des Steuersignals der Steuereinrichtung jeweils eine der Schließvorrichtung zu verstellen. Die Steuereinrichtung kann für die Aktoren separate Steuersignale vorgeben. Hierzu kann die Steuereinrichtung Bedieneingaben gemäß des ersten Bedienfreiheitsgrades erfassen und in Abhängigkeit der erfassten Bedieneingaben bestimmen, welche der Verstelleinrichtungen ausgewählt sind und diese Information speichern. Bei einer Erfassung einer Bedieneingabe gemäß des zweiten Bedienfreiheitsgrades kann die Steuereinrichtung ein Steuersignal für jene Aktoren ermitteln, die der ausgewählten Schließvorrichtung oder den ausgewählten Schließvorrichtungen zugeordnet sind, und es an diese ausgeben. Dementsprechend kann erfindungsgemäß auch eine mittels eines Sensors erfasste Bedieneingabe entsprechend eines ersten und zweiten Bedienfreiheitsgrads ausgewertet werden, wobei der erste Bedienfreiheitsgrad zur Auswahl wenigstens einer der Schließvorrichtungen und der zweite Bedienfreiheitsgrad zur Verstellung des Öffnungsgrads der Schließvorrichtung dient.

Der erste Bedienfreiheitsgrad entspricht einer linearen Bewegung oder einer Rotation der Bedieneinrichtung oder einer Komponente der Bedieneinrichtung in eine erste Bedienrichtung und der zweite Bedienfreiheitsgrad entspricht einer linearen Bewegung oder einer Rotation der Bedieneinrichtung oder der Komponente in eine gewinkelt, insbesondere senkrecht, zu der ersten Bedienrichtung stehende zweite Bedienrichtung. Insbesondere kann einer der Bedienfreiheitsgrade einer Rotation der Bedieneinrichtung oder der Komponente um eine Achse entsprechen und der andere einer Bewegung parallel zu dieser Achse. Eine der Bedienrichtungen bzw. die Achse kann im Einbauzustand in die Querrichtung des Kraftfahrzeugs und/oder in Richtung einer Verbindungslinie der Lüftungseinrichtungsöffnungen verlaufen.

Neben der erfindungsgemäßen Lüftungseinrichtung betrifft die Erfindung ein Kraftfahrzeug mit wenigstens einer erfindungsgemäßen Lüftungseinrichtung.

Das Kraftfahrzeug kann ein Steuergerät aufweisen, das zur Ansteuerung einer Anzeigevorrichtung zur Anzeige einer den Öffnungsgrad wenigstens einer der Schließvorrichtungen und/oder die Auswahl einer oder mehrerer der Schließvorrichtungen beschreibenden Information ausgebildet ist. Das Steuergerät des Kraftfahrzeugs kann identisch zu dem in Verbindung mit der Beleuchtungseinrichtung der Lüftungseinrichtung genannten Steuergerät oder separat von diesem ausgebildet sein.

Bei einer mittels der Anzeigevorrichtung erzeugten Darstellung kann es sich um die Darstellung einer Information handeln, die einen Zustand der Bedieneinrichtung beschreibt und/oder die angibt, welche der Schließvorrichtungen ausgewählt ist oder sind und/oder die den Öffnungsgrad einer oder mehrerer der ausgewählten Schließvorrichtungen und/oder einer oder mehrerer der nicht ausgewählten Schließvorrichtungen anzeigt. Durch eine entsprechende Anordnung der Anzeigevorrichtung im Innenraum des Kraftfahrzeugs kann erreicht werden, dass der Fahrer durch eine Bedienung der Lüftungseinrichtung nicht von dem Führen des Kraftfahrzeugs abgelenkt wird, da ihm alle relevanten Informationen mittels der Anzeigevorrichtung dargestellt werden.

Erfindungsgemäß kann die Bedienungseinrichtung zwischen der ersten und der zweiten Lüftungseinrichtungsöffnung entweder an der Lüftungseinrichtung oder einer Komponente des Fahrzeuginnenraums angeordnet sein. Es liegt im Rahmen der Erfindung, dass mehrere Lüftungseinrichtungen, die an unterschiedlichen Stellen im Kraftfahrzeuginnenraum angeordnet sind, mittels einer Bedieneinrichtung steuerbar sind, obwohl sie nicht in einem gemeinsamen Gehäuse eingebettet sind.

Erfindungsgemäß kann der erste Bedienfreiheitsgrad einer Bewegung der Bedieneinrichtung, oder einer Komponente der Bedieneinrichtung in Querrichtung des Kraftfahrzeugs entsprechen.

Weitere Vorteile und Einzelheiten der Erfindung werden nachfolgend anhand von Ausführungsbeispielen unter Bezugnahme auf die Zeichnungen erläutert. Die Zeichnungen zeigen schematisch:
- Fig. 1: eine erfindungsgemäße Lüftungseinrichtung in einer geschnittenen Draufsicht;
- Fig. 2: die in Fig. 1 gezeigte Lüftungseinrichtung in einer Frontalansicht; und
- Fig. 3: ein weiteres Ausführungsbeispiel einer erfindungsgemäßen Lüftungseinrichtung in einer geschnittenen Draufsicht.

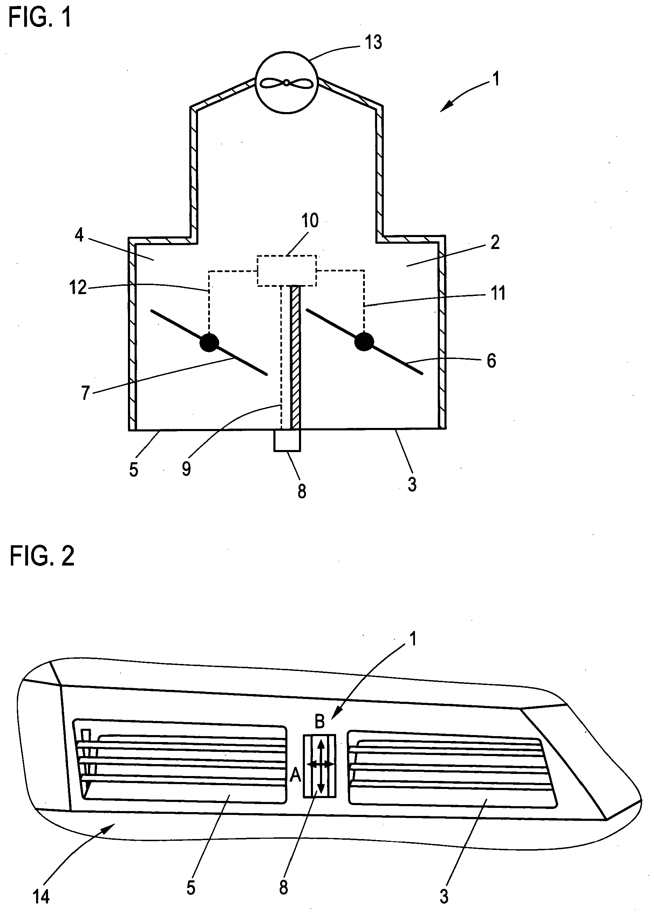

Fig. 1 zeigt eine Lüftungseinrichtung 1 für ein Kraftfahrzeug mit einem ersten Lüftungskanal 2 und einer ersten Lüftungseinrichtungsöffnung 3, über die ein Luftstrom in einen Kraftfahrzeuginnenraum geführt wird. Zudem weist die Lüftungseinrichtung 1 einen zweiten Lüftungskanal 4 und eine zweite Lüftungseinrichtungsöffnung 5 auf, durch die ein weiterer Luftstrom in den Kraftfahrzeuginnenraum geführt wird. Die Lüftungseinrichtung 1 umfasst eine erste Schließvorrichtung 6 und eine zweite Schließvorrichtung 7, die beide drehbar gelagert sind, wobei die erste Schließvorrichtung 6 dazu eingerichtet ist, durch Änderung ihres Öffnungsgrads den ersten Lüftungskanal 2 in ihrer Schließstellung zu verschließen, und die zweite Schließvorrichtung 7 dazu eingerichtet ist, durch Ändern ihres Öffnungsgrads den zweiten Lüftungskanal 4 in ihrer Schließstellung zu verschließen. Damit es einem Benutzer respektive einem Fahrzeuginsassen ermöglicht wird, die Schließvorrichtungen 6, 7 zu steuern, ist an der Lüftungseinrichtung 1 eine Bedieneinrichtung 8 angeordnet, die einen ersten und einen zweiten Bedienfreiheitsgrad A, B aufweist (siehe Fig. 2).

Die Bedieneinrichtung 8 ist über eine mechanische Bewegungskopplung 9 mit einer Kopplungseinrichtung 10 verbunden, wobei die Kopplungseinrichtung 10 wiederum über eine mechanische Bewegungskopplung 11 mit der drehbar gelagerten ersten Schließvorrichtung 6 und über eine mechanische Bewegungskopplung 12 mit der drehbar gelagerten zweiten Schließvorrichtung 7 verbunden ist, so dass die Kopplungseinrichtung 10 in Abhängigkeit einer Bedienung an der Bedieneinrichtung 8 die erste Schließvorrichtung 6 oder die zweite Schließvorrichtung 7 mit der Bedieneinrichtung 8 bewegungskoppelt. Die mechanische Bewegungskopplung 9 ist eine drehbare Welle, wobei das Drehen der Welle durch eine Bedienhandlung an der Bedieneinrichtung 8 entsprechend des zweiten Bedienfreiheitsgrades B der Bedieneinrichtung 8 durchführbar ist. Die Kopplungseinrichtung 10 umfasst zwei Antriebselemente, von denen jeweils ein Antriebselement mit den Schließvorrichtungen 6, 7 gekoppelt ist. Durch Betätigung der Bedieneinrichtung gemäß dem ersten Bedienfreiheitsgrad A ist die Lage der Welle derart verstellbar, dass die Kopplungseinrichtung 10 die Welle entweder mit dem ersten der Antriebselemente und somit über die mechanische Bewegungskopplung 11 mit der ersten Schließvorrichtung 6 oder mit dem zweiten der Antriebselemente und somit über die mechanische Bewegungskopplung 12 mit der Schließvorrichtung 7 koppelt.

Mittels der Kopplungseinrichtung 10 können auch beide Schließvorrichtungen 6, 7 von der Bedieneinrichtung 8 entkoppelt werden, so dass eine versehentliche Betätigung der Bedieneinrichtung 8 durch einen Benutzer respektive einen Fahrzeuginsassen keine Verstellung der Schließvorrichtungen 6, 7 zur Folge hat. Sowohl der durch den ersten Lüftungskanal 2 geführte Luftstrom als auch der durch den zweiten Lüftungskanal 4 geführte Luftstrom wird durch ein zentrales Gebläse 13 erzeugt.

Fig. 2 zeigt die bereits in Fig. 1 dargestellte Lüftungseinrichtung 1 für ein Kraftfahrzeug in einer frontalen Ansicht. Demnach sind die beiden Lüftungseinrichtungsöffnungen 3, 5 und die Anordnung der Bedieneinrichtung 8 zwischen der ersten Lüftungseinrichtungsöffnung 3 und der zweiten Lüftungseinrichtungsöffnung 5 dargestellt. Die Bedieneinrichtung 8 kann entsprechend ihrer zwei Bedienfreiheitsgrade A, B verstellt werden, wobei mittels des ersten Bedienfreiheitsgrades A auswählbar ist, welche der Schließvorrichtungen 6, 7 zur nachfolgenden Einstellung des Öffnungsgrades durch den zweiten Bedienfreiheitsgrad B ausgewählt ist oder sind und mittels des zweiten Bedienfreiheitsgrades B der Öffnungsgrad wenigstens einer Ausgewählten der Schließvorrichtungen 6, 7 einstellbar ist. Im Rahmen des gezeigten Ausführungsbeispiels handelt es sich bei der Bedieneinrichtung 8 um ein Drehrad, das entsprechend des ersten Bedienfreiheitsgrades A verschiebbar ist, wodurch eine der Schließvorrichtungen 6, 7 auswählbar ist. Zudem ist das Bedienrad entsprechend des zweiten Bedienfreiheitsgrades B drehbar, wodurch der Öffnungsgrad einer Schließvorrichtung 6, 7 einstellbar ist.

Wie in Fig. 2 dargestellt befindet sich die Bedieneinrichtung in einer mittleren Stellung, die einem Grundzustand der Bedieneinrichtung entspricht. Aus diesem Grundzustand kann die Bedieneinrichtung entsprechend der Freiheitsgrade A und B, in der jeweiligen Pfeilrichtung verstellt werden, um wenigstens eine Schließvorrichtung 6, 7 zur Einstellung des Öffnungsgrades auszuwählen, respektive den Öffnungsgrad wenigstens einer Ausgewählten der Schließvorrichtungen 6, 7 einzustellen.

In Fig. 2 ist die Lüftungseinrichtung 1 in ihrem verbauten Zustand in einem Kraftfahrzeuginnenraum gezeigt, wobei die Lüftungseinrichtung 1 in ein Armaturenbrett 14 des Kraftfahrzeugs eingebettet ist und die Bedieneinrichtung 8 somit bequem sowohl vom Fahrer als auch vom Beifahrer bedient werden kann.

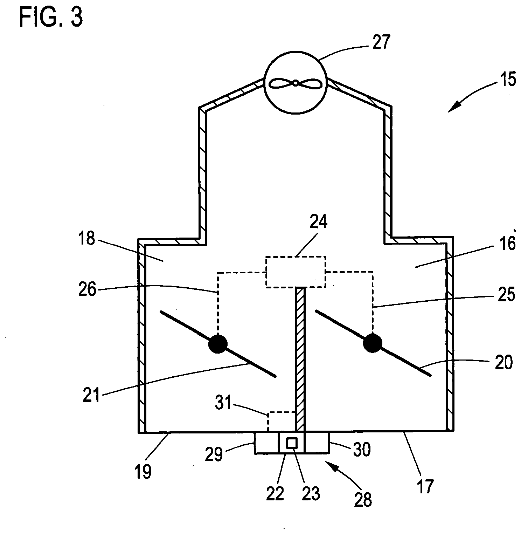

Fig. 3 zeigt ein weiteres Ausführungsbeispiel einer Lüftungseinrichtung 15 mit einem ersten Lüftungskanal 16 und einer ersten Lüftungseinrichtungseinrichtungsöffnung 17, durch die ein Luftstrom in einen Kraftfahrzeuginnenraum geführt wird. Zudem umfasst die Lüftungseinrichtung 15, wie bereits im vorangegangenen Ausführungsbeispiel, einen zweiten Lüftungskanal 18 und eine zweite Lüftungseinrichtungsöffnung 19, durch die ein weiterer Luftstrom in den Kraftfahrzeuginnenraum geführt wird.

Im ersten Lüftungskanal 16 ist eine erste Schließvorrichtung 20 in Form einer drehbar gelagerten Klappe angeordnet, so dass durch die erste Schließvorrichtung 20 der erste Lüftungskanal 16 verschließbar ist. In dem zweiten Lüftungskanal 18 ist eine zweite Schließvorrichtung 21, ebenfalls in Form einer drehbar gelagerten Klappe angeordnet, so dass durch die zweite Schließvorrichtung 21 der zweite Lüftungskanal 18 verschließbar ist. An einem im verbauten Zustand zugänglichen Ende der Lüftungseinrichtung 15 ist eine Bedieneinrichtung 22 angeordnet, die zur Bereitstellung eines Sensorsignals in Abhängigkeit einer Bedieneingabe eines Benutzers einen Sensor 23 aufweist. Bei dem Sensor 23 handelt es sich um einen Sensor, der Bewegungen eines Bedienrades erfasst. Das Bedienrad ist einerseits rotierbar und andererseits in Querrichtung des Kraftfahrzeugs verstellbar. Eine Bedienhandlung eines Benutzers gemäß des ersten Bedienfreiheitsgrades A ist durch Verstellen des Bedienrades in axialer Richtung respektive in Querrichtung des Kraftfahrzeugs ausführbar. Eine Bedienhandlung eines Benutzers gemäß des zweiten Bedienfreiheitsgrades B ist durch Rotation des Bedienrades ausführbar.

Der Sensor 23 könnte in einem alternativen Ausführungsbeispiel auch ein berührungsempfindliches Touchpanel sein, mithilfe dessen eine Berührung respektive eine Bewegung eines Fingers eines Benutzers in unterschiedliche Richtungen erfassbar ist. Eine Bedienhandlung eines Benutzers gemäß des ersten Bedienfreiheitsgrades ist durch eine Berührung des Touchpanels mit einem Finger und Bewegung des Fingers in Querrichtung des Kraftfahrzeugs ausführbar. Eine Bedienhandlung eines Benutzers gemäß des zweiten Bedienfreiheitsgrades hingegen ist durch eine Berührung des Touchpanels mit einem Finger und Bewegung des Fingers in Hochrichtung des Kraftfahrzeugs ausführbar.

Ein von dem Sensor 23 in Abhängigkeit der den Bedienfreiheitsgraden entsprechenden Bedienhandlungen erzeugtes Sensorsignal wird an eine Steuereinrichtung 31 übertragen und durch die Steuereinrichtung 31 in ein korrespondierendes Steuersignal umgesetzt. Anschließend erfolgt eine drahtlose Funkübertragung des Steuersignals an die Verstelleinrichtung 24. Die Verstelleinrichtung 24 umfasst einen ersten und einen zweiten Aktor zur Verstellung des jeweiligen Öffnungsgrads der ersten bzw. der zweiten Schließvorrichtung 20, 21. Führt ein Benutzer eine Bedienhandlung entsprechend des ersten Bedienfreiheitsgrades A des Bedienrades aus, wird durch die Steuereinrichtung in Abhängigkeit der Bedienhandlung angepasst, welche Aktoren der Verstelleinrichtung 24 ausgewählt sind und diese Auswahl wird gespeichert.

Führt ein Benutzer eine Bedienhandlung entsprechend des zweiten Bedienfreiheitsgrades B des Bedienrades aus, wird vom Sensor 23 in Abhängigkeit der Rotation des Bedienrades ein Öffnungsgradsignal erzeugt. Das Öffnungsgradsignal wird an die Steuereinrichtung 31 übertragen und von dieser in Öffnungsgradsteuersignale für den ersten und zweiten Aktor umgesetzt. Die Ausgabe der Öffnungsgradsteuersignale erfolgt nur für jene Aktoren, die der momentan ausgewählten Schließvorrichtung oder den momentan ausgewählten Schließvorrichtungen zugeordnet ist oder sind.

Sowohl der durch den ersten Lüftungskanal 16 geführte Luftstrom als auch der durch den zweiten Lüftungskanal 18 geführte Luftstrom wird durch ein zentrales Gebläse 27 erzeugt. Eine Beleuchtungseinrichtung 28 ist derart an der Lüftungseinrichtung 15 angeordnet, dass sich zwei Leuchtmittel 29, 30 links und rechts von der Bedieneinrichtung 22 befinden. Ein Steuergerät, das gemeinsam mit der Steuereinrichtung 31 implementiert ist, steuert die Beleuchtungseinrichtung derart an, dass je nachdem welche Schließeinrichtung 20, 21 zur Verstellung des Öffnungsgrads ausgewählt ist, das entsprechende Leuchtmittel 29, 30 sichtbares Licht ausgibt.

## Patentansprüche

1. Lüftungseinrichtung (1, 15) für ein Kraftfahrzeug mit einem ersten Lüftungskanal (2, 16) zum Führen eines ersten Luftstroms über eine erste Lüftungseinrichtungsöffnung (3, 17) in einen Kraftfahrzeuginnenraum, einem zweiten Lüftungskanal (4, 18) zum Führen eines zweiten Luftstroms über eine zweite Lüftungseinrichtungsöffnung (5, 19) in den Kraftfahrzeuginnenraum, und einer ersten und einer zweiten Schließvorrichtung (6, 20, 7, 21), deren jeweiliger Öffnungsgrad durch eine Bedieneinrichtung (8, 22) zwischen einer Offen- und einer Schließstellung verstellbar ist, wobei die erste Schließvorrichtung (6, 20) in der Schließstellung den ersten Lüftungskanal (2, 16) und die zweite Schließvorrichtung (7, 21) in der Schließstellung den zweiten Lüftungskanal (4, 18) verschließt, wobei die Bedieneinrichtung (8, 22) wenigstens zwei Bedienfreiheitsgrade (A, B) aufweist, wobei mittels des ersten Bedienfreiheitsgrades (A) auswählbar ist, welche der Schließvorrichtungen (6, 20, 7, 21) zur nachfolgenden Einstellung des Öffnungsgrades durch den zweiten Bedienfreiheitsgrad (B) ausgewählt ist oder sind, und mittels des zweiten Bedienfreiheitsgrades (B) der Öffnungsgrad oder die Öffnungsgrade der ausgewählten Schließvorrichtung (6, 20, 7, 21) einstellbar ist oder sind,
**dadurch gekennzeichnet,**
**dass** der erste Bedienfreiheitsgrad (A) einer linearen Bewegung oder einer Rotation der Bedieneinrichtung (8, 22) oder einer Komponente der Bedieneinrichtung (8, 22) in eine erste Bedienrichtung und der zweite Bedienfreiheitsgrad (B) einer linearen Bewegung oder einer Rotation der Bedieneinrichtung (8, 22) oder der Komponente in eine gewinkelt zu der ersten Bedienrichtung stehende zweite Bedienrichtung entsprechen.

2. Lüftungseinrichtung nach Anspruch 1,
**dadurch gekennzeichnet,**
**dass** die Bedieneinrichtung (8, 22) an der Lüftungseinrichtung (1, 15) zwischen der ersten und der zweiten Lüftungseinrichtungsöffnung (3, 17, 5, 19) angeordnet ist.

3. Lüftungseinrichtung nach Anspruch 1 oder 2,
**dadurch gekennzeichnet,**
**dass** sie eine Beleuchtungseinrichtung (28) und ein die Beleuchtungseinrichtung steuerndes Steuergerät aufweist, wobei das Steuergerät eingerichtet ist, die Beleuchtungseinrichtung (28) in Abhängigkeit der ausgewählten Schließvorrichtung (20, 21) zur Gabe eines optischen Signals anzusteuern.

4. Lüftungseinrichtung nach einem der vorangehenden Ansprüche,
**dadurch gekennzeichnet,**
**dass** es eine Kopplungseinrichtung (10) aufweist, die die Bedieneinrichtung (8) mit der ausgewählten Schließvorrichtung (6, 7) oder den ausgewählten Schließvorrichtungen (6, 7) mechanisch bewegungskoppelt.

5. Lüftungseinrichtung nach einem der Ansprüche 1 bis 3,
**dadurch gekennzeichnet,**
**dass** sie eine Verstelleinrichtung (24), die zur separaten Verstellung des Öffnungsgrades der ersten und der zweiten Schließvorrichtung in Abhängigkeit eines Steuersignals eingerichtet ist, und eine Steuereinrichtung (31), die zur Bereitstellung des Steuersignals in Abhängigkeit von einer über wenigstens einen Sensor (23) der Bedieneinrichtung (22) erfassten Bedieneingabe eingerichtet ist, umfasst.

6. Kraftfahrzeug,
**dadurch gekennzeichnet,**
**dass** es wenigstens eine Lüftungseinrichtung (1, 15) nach Anspruch 1 oder nach einem der Ansprüche 3 bis 5 umfasst.

7. Kraftfahrzeug nach Anspruch 6,
**dadurch gekennzeichnet,**
**dass** es ein Steuergerät aufweist, das zur Ansteuerung einer Anzeigevorrichtung zur Anzeige einer den Öffnungsgrad wenigstens einer der Schließvorrichtungen (6, 20, 7, 21) und/oder die Auswahl einer oder mehrerer der Schließvorrichtungen (6, 20, 7, 21) beschreibenden Information ausgebildet ist.

8. Kraftfahrzeug nach Anspruch 6 oder 7,
**dadurch gekennzeichnet,**
**dass** die Bedieneinrichtung (8, 22) zwischen der ersten und der zweiten Lüftungseinrichtungsöffnungen (3, 17, 5, 19) entweder an der Lüftungseinrichtung (1, 15) oder an einer Komponente des Fahrzeuginnenraums angeordnet ist.

9. Kraftfahrzeug nach einem der Ansprüche 6 bis 8,
**dadurch gekennzeichnet,**
**dass** der erste Bedienfreiheitsgrad (A) einer Bewegung der Bedieneinrichtung, oder einer Komponente der Bedieneinrichtung in Querrichtung des Kraftfahrzeugs entspricht.

## Claims

1. Ventilation device (1, 15) for a motor vehicle, having a first ventilation channel (2, 16) for guiding a first air flow through a first ventilation device opening (3, 17) into a motor vehicle interior, a second ventilation channel (4, 18) for guiding a second air flow through a second ventilation device opening (5, 19) into the motor vehicle interior, and a first and a second closing device (6, 20, 7, 21), the respective degree of openness of which can be adjusted between an open and a closed position by an operating device (8, 22), wherein the first closing device (6, 20) closes the first ventilation channel (2, 16) in the closed position and the second closing device (7, 21) closes the second ventilation channel (4, 18) in the closed position, wherein the operating device (8, 22) has at least two degrees of operating freedom (A, B), wherein, by means of the first degree of operating freedom (A), it can be selected which of the closing devices (6, 20, 7, 21) is or are selected for the subsequent adjustment of the degree of openness by the second degree of operating freedom (B), and the degree of openness or the degrees of openness of the selected closing device (6, 20, 7, 21) is or are adjustable by means of the second degree of operating freedom (B),
**characterised in that**
the first degree of operating freedom (A) corresponds to a linear movement or a rotation of the operating device (8, 22) or a component of the operating device (8, 22) into a first operating direction and the second degree of operating freedom (B) corresponds to a linear movement or a rotation of the operating device (8, 22) or of the component into a second operating direction at an angle to the first operating direction.

2. Ventilation device according to claim 1,
**characterised in that**
the operating device (8, 22) is arranged on the ventilation device (1, 15) between the first and the second ventilation device opening (3, 17, 5, 19).

3. Ventilation device according to claim 1 or 2,
**characterised in that**
it has a lighting device (28) and a control device that controls the light device, wherein the control device is configured, to actuate the lighting device (28) depending on the selected closing device (20, 21), in order to emit an optical signal.

4. Ventilation device according to any one of the preceding claims,
**characterised in that**
it has a coupling device (10), which mechanically couples the operating device (8) with the selected closing device (6, 7) or the selected closing devices (6, 7) in terms of movement.

5. Ventilation device according to any one of claims 1 to 3,
**characterised in that**
it is comprises an adjusting device (24), which is configured for the separate adjustment of the degree of openness of the first and the second closing device depending on a control signal, and a control device (31), which is configured to provide the control signal depending on an operating input detected via at least one sensor (23) of the operating device (22).

6. Motor vehicle,
**characterised in that**
it comprises at least one ventilation device (1, 15) according to claim 1 or according to any one of claims 3 to 5.

7. Motor vehicle according to claim 6,
**characterised in that**
it has a control device, which is designed to actuate a display device for displaying information describing the degree of openness at least of one of the closing devices (6, 20, 7, 21) and/or the selection of one or a plurality of the closing devices (6, 20, 7, 21).

8. Motor vehicle according to claim 6 or 7,
**characterised in that**
the operating device (8, 22) is arranged between the first and the second ventilation device openings (3, 17, 5, 19) either on the ventilation device (1, 15) or on a component of the motor vehicle interior.

9. Motor vehicle according to any one of claims 6 to 8,
**characterised in that**
the first degree of operating freedom (A) corresponds to a movement of the operating device, or a component of the operating device in the transverse direction of the motor vehicle.

## Revendications

1. Dispositif de ventilation (1, 15) pour un véhicule automobile avec un premier canal de ventilation (2, 16) pour le guidage d'un premier flux d'air via une première ouverture de dispositif de ventilation (3, 17) dans un habitacle de véhicule automobile, un deuxième canal de ventilation (4, 18) pour le guidage d'un deuxième flux d'air via une deuxième ouverture de dispositif de ventilation (5, 19) dans l'habitacle de véhicule automobile, et un premier et un deuxième dispositif de fermeture (6, 20, 7, 21) dont le degré d'ouverture respectif est réglable par un dispositif de commande (8, 22) entre une position d'ouverture et une position de fermeture, dans lequel le premier dispositif de fermeture (6, 20) ferme dans la position de fermeture le premier canal de ventilation (2, 16) et le deuxième dispositif de fermeture (7, 21) ferme dans la position de fermeture le deuxième canal de ventilation (4, 18), dans lequel le dispositif de commande (8, 22) présente au moins deux degrés de liberté de commande (A, B), dans lequel il peut être sélectionné au moyen du premier degré de liberté de commande (A) lequel ou lesquels des dispositifs de fermeture (6, 20, 7, 21) est ou sont sélectionné(s) pour le réglage successif du degré d'ouverture par le deuxième degré de liberté de commande (B), et au moyen du deuxième degré de liberté de commande (B), le degré d'ouverture ou les degrés d'ouverture du dispositif de fermeture (6, 20, 7, 21) sélectionné est ou sont réglables,
**caractérisé en ce**
**que** le premier degré de liberté de commande (A) correspond à un mouvement linéaire ou à une rotation du dispositif de commande (8, 22) ou d'un composant du dispositif de commande (8, 22) dans une première direction de commande et le deuxième degré de liberté de commande (B) correspond à un mouvement linéaire ou à une rotation du dispositif de commande (8, 22) ou du composant dans une deuxième direction de commande coudée par rapport à la première direction de commande.

2. Dispositif de ventilation selon la revendication 1,
**caractérisé en ce**
**que** le dispositif de commande (8, 22) est agencé au niveau du dispositif de ventilation (1, 15) entre la première et la deuxième ouverture de dispositif de ventilation (3, 17, 5, 19).

3. Dispositif de ventilation selon la revendication 1 ou 2,
**caractérisé en ce**
**qu'**il présente un dispositif d'éclairage (28) et un dispositif de commande commandant le dispositif d'éclairage, dans lequel le dispositif de commande est aménagé pour commander le dispositif d'éclairage (28) en fonction du dispositif de fermeture (20, 21) sélectionné pour l'émission d'un signal optique.

4. Dispositif de ventilation selon l'une quelconque des revendications précédentes,
**caractérisé en ce**
**qu'**il présente un dispositif de couplage (10), qui couple en mouvement mécaniquement le dispositif de commande (8) avec le dispositif de fermeture (6, 7) sélectionné ou les dispositifs de fermeture (6, 7) sélectionnés.

5. Dispositif de ventilation selon l'une quelconque des revendications 1 à 3,
**caractérisé en ce**
**qu'**il comprend un dispositif de réglage (24), qui est aménagé pour le réglage séparé du degré d'ouverture du premier et du deuxième dispositif de fermeture en fonction d'un signal de commande, et un appareil de commande (31), qui est aménagé pour la mise à disposition du signal de commande en fonction d'une entrée de commande détectée par le biais d'au moins un capteur (23) du dispositif de commande (22).

6. Véhicule automobile,
**caractérisé en ce**
**qu'**il comprend au moins un dispositif de ventilation (1, 15) selon la revendication 1 ou selon l'une quelconque des revendications 3 à 5.

7. Véhicule automobile selon la revendication 6,
**caractérisé en ce**
**qu'**il présente un dispositif de commande, qui est réalisé pour la commande d'un dispositif d'affichage pour l'affichage d'une information décrivant le degré d'ouverture d'au moins un des dispositifs de fermeture (6, 20, 7, 21) et/ou la sélection d'un ou plusieurs des dispositifs de fermeture (6, 20, 7, 21).

8. Véhicule automobile selon la revendication 6 ou 7,
**caractérisé en ce**
**que** le dispositif de commande (8, 22) est agencé entre les premières et les deuxièmes ouvertures de dispositif de ventilation (3, 17, 5, 19) soit au niveau du dispositif de ventilation (1, 15) soit au niveau d'un composant de l'habitacle de véhicule.

9. Véhicule automobile selon l'une quelconque des revendications 6 à 8,
**caractérisé en ce**
**que** le premier degré de liberté de commande (A) correspond à un mouvement du dispositif de commande, ou à un composant du dispositif de commande dans la direction transversale du véhicule automobile.
